# NEW EUROPEAN PATENT SPECIFICATION

(11) **EP 2 649 671 B2**
(45) Date of publication and mention of the opposition decision: **16.10.2019**
(45) Mention of the grant of the patent: 30.11.2016
(21) Application number: 11802834.9
(22) Date of filing: 09.12.2011
(51) Int. Cl.: H01Q 1/12, H01Q 13/08

(54) **WINDOW ASSEMBLY HAVING A TRANSPARENT LAYER WITH A SLOT FOR A TRANSPARENT ANTENNA ELEMENT**
FENSTERANORDNUNG MIT EINER TRANSPARENTEN SCHICHT MIT EINEM STECKPLATZ FÜR EIN TRANSPARENTES ANTENNENELEMENT
ENSEMBLE FENÊTRE DOTÉ D'UNE COUCHE TRANSPARENTE AVEC UNE RAINURE POUR UN ÉLÉMENT D'ANTENNE TRANSPARENT

(30) Priority: 09.12.2010 US 421386 P; 09.12.2010 US 421381 P; 09.12.2010 US 421376 P; 09.12.2010 US 421374 P; 27.12.2010 US 201061427450 P
(43) Date of publication of application: 16.10.2013
(73) Proprietor: AGC Automotive Americas R & D, Inc., Ypsilanti, MI 48197-9701 (US)
(72) Inventor: HORIKI, Yasutaka, Ypsilanti, MI 48198 (US); VILLARROEL, Wladimiro, Ypsilanti, MI 48197 (US); LEE, Ming, Ypsilanti, MI 48198 (US)
(74) Representative: Neilson, Martin Mark
(86) International application number: PCT/US2011/064268
(87) International publication number: WO 2012/079040

(56) References cited:
- EP-A2- 0 720 249
- EP-A2- 0 760 537
- EP-A2- 0 961 342
- WO-A1-2004/027923
- WO-A1-2009/074266
- WO-A2-03/107079
- JP-A- 2003 017 931
- US-A- 3 655 545
- US-A- 4 849 766
- US-A- 5 012 255
- US-A- 5 355 144
- US-A- 5 867 129
- US-A- 5 898 407
- US-A- 6 097 345
- US-A1- 2002 094 407
- US-A1- 2007 040 746
- US-A1- 2007 216 589
- US-A1- 2012 256 798
- US-B1- 6 320 276
- US-B2- 8 941 545
- Pilkington Glass Handbook 2010
- Pilkington Architectural Glass Product Guide 2008

## Description

### BACKGROUND OF THE INVENTION

### 1. Field of the Invention

The subject invention generally relates to a window assembly for a vehicle. More specifically, the subject invention relates to a transparent antenna element disposed within a slot defined by a transparent layer disposed within the window assembly.

### 2. Description of the Related Art

Recently, there is an increasing demand in vehicle windshields having clear films or coatings embedded within the windshield for various purposes. Such clear films or coatings often have metal compounds, such as metal oxides, for making the clear films or coatings electrically conductive. These clear films or coatings have been utilized in defogging or defrosting systems and even as active antenna elements for vehicles. More recently, the clear films or coatings have been applied to windshields to absorb heat from sunlight penetrating the windshield. In particular, the clear films or coatings absorb infrared radiation from sunlight. In so doing, the clear films or coatings reduce the amount of infrared radiation entering an interior of the vehicle. The clear films or coatings enable a lower interior temperature as compared to a vehicle having a windshield with no clear films or coatings. As a result, during the warm months, less energy is required to lower the interior temperature of the vehicle. To maximize efficiency of the clear films or coatings to absorb infrared radiation, the clear films or coatings are often applied over a substantial part of the windshield, often covering the entire field of view of the driver or occupant of the vehicle.

Traditionally, antennas have been employed on vehicle windshields for a variety of applications. The antennas are often placed upon various locations of the windshield and are energized by a feeder line, which is coupled to the antenna. Frequently, it is necessary for the antennas to be disposed within or on an outer surface of the windshield of the vehicle. For the antenna to effectively receive or transmit radio waves without interruption, it is also necessary to reduce surrounding electromagnetic interference with the antenna to the extent possible.

Although the clear films or coatings effectively reduce transmission of infrared radiation through the windshield, the clear films or coatings may also negatively affect the ability of the antenna to adequately transmit or receive radio waves. Specifically, as mentioned above, the clear films or coatings are electrically conductive and therefore naturally have the potential to interfere adversely with the radiation pattern and gain of the antenna on the windshield. Furthermore, where the clear films or coatings are applied over a substantial part of the windshield, there remains minimal space on the windshield to place the antenna such that the clear films or coatings do not adversely affect the functionality of the antenna.

In addition, there is a need to control radiation patterns and impedance characteristics of antennas employed on vehicles. Specifically, antennas utilized by the vehicle are being subjected to ever-increasing electromagnetic interference. As such, controlling radiation patterns and impedance characteristics of antennas employed by the vehicle has become increasingly important in order to ensure optimal efficiency of the antennas in transmitting or receiving RF signals.

### SUMMARY OF THE INVENTION AND ADVANTAGES

The invention provides a window assembly for a vehicle. The window assembly includes an exterior substrate and an interior substrate. The exterior substrate has an inner surface and an outer surface. The interior substrate is disposed adjacent the exterior substrate and has an inner surface and an outer surface. The interior and exterior substrates define a first peripheral boundary. A transparent layer is disposed between the inner surfaces of the exterior and interior substrates. The transparent layer defines an area covering the window assembly. The area defines a second peripheral boundary. The transparent layer includes a metal compound such that the transparent layer is electrically conductive. An outer region, which is electrically non-conductive, is defined on the window assembly between the first and second peripheral boundaries. A slot is defined by the area and opens into the outer region. The slot is devoid of the transparent layer and electrically non-conductive. A transparent antenna element is disposed within the slot. The transparent antenna element is electrically disconnected from the transparent layer such that the transparent antenna element operates independent of the transparent layer. A feeding element is coupled to the transparent antenna element for energizing the transparent antenna element. An opening, which is devoid of the transparent layer and electrically non-conductive, is defined by the area and spaced from the slot.

Accordingly, the window assembly provides the slot in the transparent layer for allowing placement of the transparent antenna element within the slot. As such, the transparent antenna element may still be included with the window assembly in instances where there otherwise would be minimal or no space available on the window assembly for the transparent antenna element to properly excite radio frequency waves without being subjected to interference by the transparent layer. In addition, the transparent antenna element may transmit or receive radio waves while providing an unobstructed field of view through the window assembly.

Furthermore, a portion of the transparent layer defining a perimeter of the opening may be electrically coupled to the transparent antenna element such that the portion is utilized to the advantage of the transparent antenna element. Specifically, the portion may alter the radiation pattern of the transparent antenna element. Additionally, the portion may alter impedance characteristics of the transparent antenna element thereby improving tuning and efficiency of the transparent antenna element. The opening also enables placement of a supplemental antenna element within the opening to minimize interruption of transmission or reception by the supplemental antenna element. In addition, the portion defining the perimeter of the opening may be electrically coupled to the supplemental antenna element to improve performance of the supplemental antenna element. Simultaneously, the area of the transparent layer is maximized for operation of the transparent layer in other useful applications such as a defogging, a defrosting, or an infrared radiation absorbing element.

According to a first aspect of the present invention there is provided a window assembly for a vehicle, said window assembly comprising: an exterior substrate having an inner surface and an outer surface; an interior substrate disposed adjacent said exterior substrate and having an inner surface and an outer surface with said interior and exterior substrates defining a first peripheral boundary; a transparent layer disposed between said inner surfaces of said exterior and interior substrates and defining an area covering said window assembly with said area defining a second peripheral boundary, wherein said transparent layer comprises a metal compound such that said transparent layer is electrically conductive; an outer region defined on said window assembly between said first and second peripheral boundaries and being electrically non-conductive; a slot defined by said area and opening into said outer region at two independent locations along said second peripheral boundary of said area with said slot being devoid of said transparent layer and electrically non-conductive; a transparent antenna element disposed within said slot, wherein said transparent antenna element is electrically disconnected from said transparent layer such that said transparent antenna element operates independent of said transparent layer; and a feeding element coupled to said transparent antenna element for energizing said transparent antenna element; characterized in that an opening is defined by within said area and spaced from said slot, wherein said opening is devoid of said transparent layer and electrically non-conductiver and wherein a supplemental antenna element which is different from said transparent antenna element is disposed in said opening and wherein said supplemental antenna element is electrically disconnected from said transparent layer such that said supplemental antenna element operates independent of said transparent layer.

Preferably, a portion of said transparent layer defining a perimeter of said opening is capacitively coupled to said transparent antenna element such that said portion is a parasitic element with respect to said transparent antenna element. Preferably, said opening is defined within and surrounded by said area of said transparent layer. Preferably, said supplemental antenna element is formed of metal wire. Preferably, said supplemental antenna element is formed of a transparent coating which is electrically conductive. Preferably, said supplemental antenna element overlaps said transparent layer and overlaps said opening. Preferably, said transparent antenna element and said supplemental antenna element implement a diversity antenna system. Preferably, said transparent antenna element is disposed coplanar with respect to said supplemental antenna element. Preferably, said transparent antenna element is disposed non-coplanar with respect to said supplemental antenna element. Preferably, said transparent antenna element is partially disposed within said outer region. Preferably, said feeding element is disposed within said outer region. Preferably, said feeding element is disposed within said slot. Preferably, said transparent antenna element is disposed non-coplanar with respect to said transparent layer. Preferably, said transparent antenna element is disposed coplanar with respect to said transparent layer. Preferably, the window assembly includes an interlayer disposed between said inner surfaces of said exterior and interior substrates. Preferably, said interlayer comprises polyvinyl butyral. Preferably, said transparent layer is disposed between said interlayer and said inner surface of said exterior substrate. Preferably, said transparent layer is disposed between said interlayer and said inner surface of said interior substrate. Preferably, said transparent antenna element is disposed between said interlayer and said inner surface of said exterior substrate. Preferably, said transparent antenna element is disposed between said interlayer and said inner surface of said interior substrate. Preferably, said transparent antenna element is formed of a transparent coating which is electrically conductive. Preferably, said metal compound comprises a metal oxide. Preferably, said metal oxide comprises a tin oxide.

Preferably, said transparent antenna element is disposed on said outer surface of one of said interior and exterior substrates. Preferably, said feeding element is spaced from and capacitively coupled to said transparent antenna element. Preferably, said feeding element abuts and is in direct electrical connection with said transparent antenna element. Preferably, said transparent layer has a sheet resistance in a range between 0.5-20 Ω/square. Preferably, said transparent antenna element has a sheet resistance in a range between 0.5-20 Ω/square. Preferably, said area of said transparent layer covers a majority of said window assembly.

### BRIEF DESCRIPTION OF THE DRAWINGS

Other advantages of the present invention will be readily appreciated, as the same becomes better understood by reference to the following detailed description when considered in connection with the accompanying drawings wherein:
FIG. 1 is a perspective view of a vehicle having a window assembly with a transparent layer defining an opening and a slot with a transparent antenna element disposed within the slot according to an illustrative example outside of the present invention;
FIG. 2a is a cross-sectional partial view of the window assembly having the transparent layer disposed between an interior and exterior substrate and the transparent antenna element disposed within the slot on an outer surface of the interior substrate;
FIG. 2b is a cross-sectional partial view of the window assembly having the transparent layer disposed between the exterior and interior substrates and the transparent antenna element disposed within the slot between the exterior and interior substrates;
FIG. 2c is a cross-sectional partial view of the window assembly having the transparent layer disposed between the interior and exterior substrates and the transparent antenna element disposed within the slot on the outer surface of the exterior substrate;
FIG. 3 is a plan view of the window assembly having the transparent layer covering a majority of the window assembly and having the transparent antenna element disposed within the slot and a supplemental antenna element which includes metal wire disposed within the opening which opens into an outer region according to an illustrative example outside of the present invention;
FIG. 4 is a plan view of the window assembly having the transparent layer with the transparent antenna element disposed within the slot which opens into the outer region at two independent locations and having the supplemental antenna element which includes transparent coating disposed within and overlapping the opening which is enclosed within the transparent layer;
FIG. 5 is a plan view of the window assembly having the transparent layer with the transparent antenna element disposed within the slot and having the supplemental antenna element which includes metal wire disposed within and overlapping the opening which is enclosed within the transparent layer according to an illustrative example outside of the present invention;
FIG. 6a is a cross-sectional partial view of the window assembly having an interlayer sandwiched between the transparent layer and an inner surface of the interior substrate with the transparent antenna element disposed within the slot on the outer surface of the exterior substrate;
FIG. 6b is a cross-sectional partial view of the window assembly having the interlayer sandwiched between the transparent layer and the inner surface of the interior substrate with the transparent antenna element disposed within the slot between the interlayer and an inner surface of the exterior substrate;
FIG. 6c is a cross-sectional partial view of the window assembly having the interlayer sandwiched between the transparent layer and the inner surface of the interior substrate with the transparent antenna element disposed within the slot on the outer surface of the interior substrate;
FIG. 6d is a cross-sectional partial view of the window assembly having the interlayer sandwiched between the transparent layer and the inner surface of the exterior substrate with the transparent antenna element disposed within the slot on the outer surface of the exterior substrate;
FIG. 6e is a cross-sectional partial view of the window assembly having the interlayer sandwiched between the transparent layer and the inner surface of the exterior substrate with the transparent antenna element disposed within the slot between the interlayer and an inner surface of the interior substrate;
FIG. 6f is a cross-sectional partial view of the window assembly having the interlayer sandwiched between the transparent layer and the inner surface of the exterior substrate with the transparent antenna element disposed within the slot on the outer surface of the interior substrate;
FIG. 7a is an enlarged view of the window assembly having the transparent antenna element disposed within the slot with a feeding element coupled to the transparent antenna element and the opening spaced from the slot according to an illustrative example outside of the present invention;
FIG. 7b is a partial cross-sectional view of the window assembly having the feeding element spaced from and capacitively coupled to the transparent antenna element;
FIG. 7c is a partial cross-sectional view of the window assembly having the feeding element abutting and in direct electrical connection with the transparent antenna element;
FIG. 8a is a cross-sectional partial view of the window assembly having the transparent antenna element disposed within the slot between the interlayer and the inner surface of the exterior substrate and the supplemental antenna element which includes metal wire overlapping the opening and embedded between the interlayer and the inner surface of the interior substrate; and
FIG. 8b is a cross-sectional partial view of the window assembly having the transparent antenna element disposed within the slot and embedded between the interlayer and the inner surface of the interior substrate and the supplemental antenna element which includes transparent coating disposed entirely within the opening between the interlayer and the inner surface of the exterior substrate.

### DETAILED DESCRIPTION OF THE INVENTION AND RELATED ILLUSTRATIVE EXAMPLES

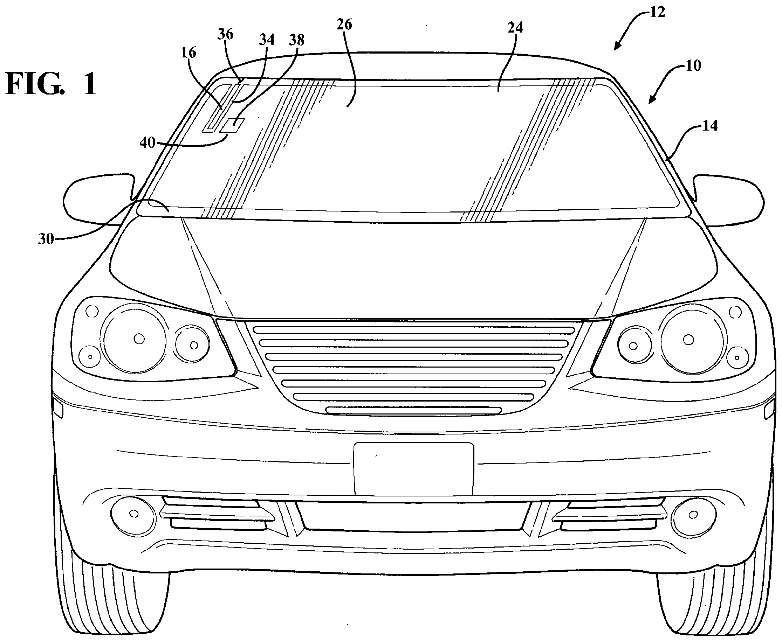

Referring to the Figures, wherein like numerals indicate corresponding parts throughout the several views, a window assembly is shown generally at 10 in FIG. 1. Most preferably, the window assembly 10 is for a vehicle 12. The window assembly 10 may be a front window (windshield) as illustrated in FIG. 1. Alternatively, the window assembly 10 may be a rear window (backlite), a roof window (sunroof), or any other window of the vehicle 12. Typically, the vehicle 12 defines an aperture and the window assembly 10 closes the aperture. The aperture is conventionally defined by a window frame 14 of the vehicle 12, which is typically electrically conductive. The window assembly 10 may be for applications other than for vehicles 12. Specifically, the window assembly 10 may be for architectural applications such as homes, buildings, and the like.

A transparent antenna element 16 is included with the window assembly 10. The transparent antenna element 16 is configured to receive linearly polarized radio frequency (RF) signals. Specifically, the linearly polarized RF signals which the transparent antenna element 16 may receive include, but are not limited to, AM, FM, RKE, DAB, DSRC, WiMAX, or DTV signals. The transparent antenna element 16 may also be configured to transmit linearly polarized RF signals. Most preferably, the transparent antenna element 16 is configured for transmission and/or reception of FM frequencies generally in the range from 88 MHz to 108 MHz. Furthermore, the transparent antenna element 16 may be configured to transmit or receive circularly polarized RF signals such as GPS signal, Satellite Digital Audio Radio Service (SDARS) signals, and the like. The window assembly 10 may include a plurality of transparent antenna elements 16.

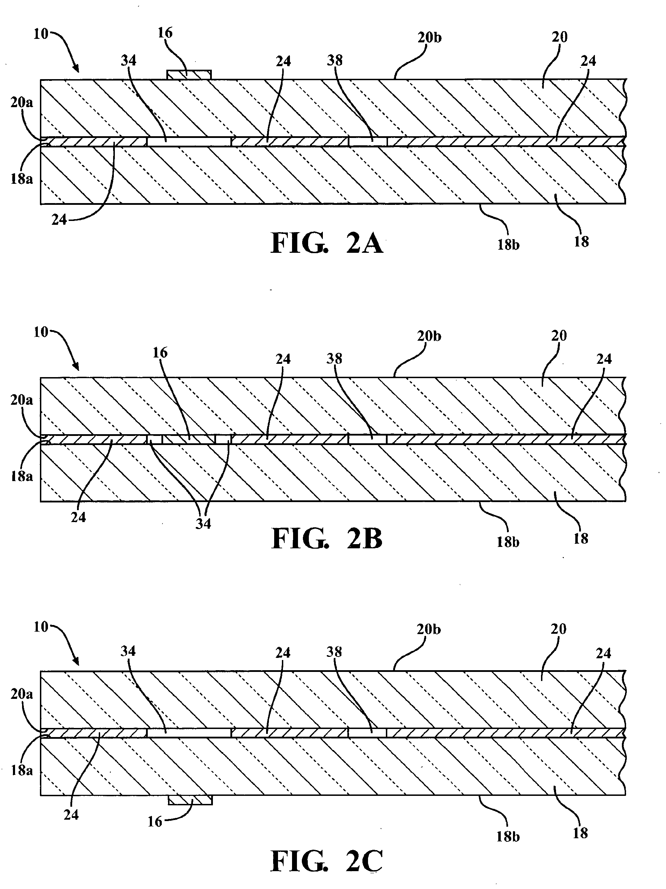

As illustrated in FIGS. 2a-2c, the window assembly 10 includes an exterior substrate 18 and an interior substrate 20 disposed adjacent the exterior substrate 18. The interior substrate 20 is disposed parallel to and spaced from the exterior substrate 18 such that the substrates 18, 20 are not contacting one another. However, it is to be appreciated that the exterior substrate 18 may directly abut the interior substrate 20. Typically, the exterior and interior substrates 18, 20 are electrically non-conductive. As mentioned herein, the term "non-conductive" refers generally to a material, such as an insulator or dielectric, that when placed between conductors at different electric potentials, permits a negligible current to flow through the material. The exterior and interior substrates 18, 20 are also substantially transparent to light. However, it is to be appreciated that the exterior and interior substrates 18, 20 may be colored or tinted and still be substantially transparent to light. As used herein, the term "substantially transparent" is defined generally as having a visible light transmittance of greater than 60 percent.

The exterior and interior substrates 18, 20 may be joined together to form the window assembly 10. It is preferred that the exterior and interior substrates 18, 20 are panes of glass. The panes of glass are preferably automotive glass and, more preferably, soda-lime-silica glass. The exterior and interior substrates 18, 20 may be plastic, fiberglass, or other suitable electrically non-conductive and substantially transparent material. For automotive applications, the exterior and interior substrates 18, 20 are each typically 3.2 mm thick.

Each of the exterior and interior substrates 18, 20 has an inner surface 18a, 20a and an outer surface 18b, 20b. The outer surface 18b of the exterior substrate 18 typically faces an exterior of the vehicle 12. The outer surface 20b of the interior substrate 20 typically faces an interior of the vehicle 12. The inner surfaces 18a, 20a of the exterior and interior substrates 18, 20 typically face one another when the exterior and interior substrates 18, 20 are joined together to form the window assembly 10.

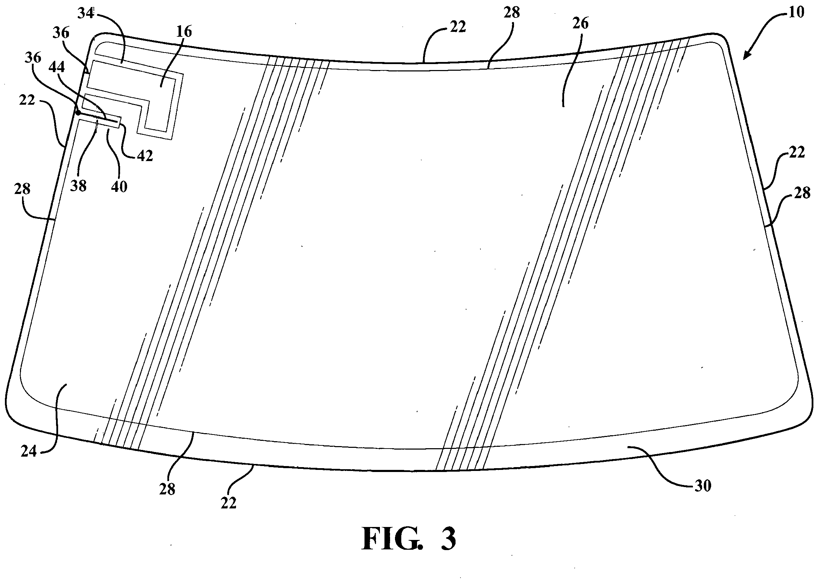

As shown in FIGS. 3-5, the exterior and interior substrates 18, 20 define a first peripheral boundary 22. The first peripheral boundary 22 is defined preferably by a peripheral edge of the window assembly 10. Conventionally, the peripheral edge of the window assembly 10 is shared by the exterior and interior substrates 18, 20. Specifically, the exterior and interior substrates 18, 20 typically have substantially similar areas and shapes with each substrate 18, 20 having an edge forming part of the peripheral edge when the substrates 18, 20 are joined. It is to be appreciated that the edges of exterior and interior substrates 18, 20 need not align to define the first peripheral boundary 22. In other words, the edge of the exterior or interior substrate 18, 20 may extend beyond the edge of the other, respectively. In such instances, the first peripheral boundary 22 may be defined by either or both edges of the substrates 18, 20. Conventionally, the first peripheral boundary 22 has a generally trapezoidal configuration. However, the first peripheral boundary 22 may have any suitable shape.

Referring back to FIGS. 2a-2c, a transparent layer 24 is disposed between the exterior and interior substrates 18, 20. The window assembly 10 preferably includes the transparent layer 24 sandwiched between the exterior and interior substrates 18, 20 such that the transparent layer 24 is abutting the substrates 18, 20. More specifically, the transparent layer 24 is preferably disposed on the inner surfaces 18a, 20a of the exterior and/or interior substrates 18, 20. Disposal of the transparent layer 24 between the exterior and interior substrates 18, 20 protects the transparent layer 24 from direct contact with environmental factors which may damage the transparent layer 24 such as snow, ice, and the like.

Typically, the transparent layer 24 is substantially transparent to light. Accordingly, a driver or occupant of the vehicle 12 may see through the window assembly 10 having the transparent layer 24. With the transparent layer 24 disposed within the window assembly 10, the window assembly 10 generally exhibits greater than 60 percent visible light transmission through the window assembly 10. The transparent layer 24 preferably absorbs heat from sunlight penetrating the window assembly 10. In particular, the transparent layer 24 reduces transmission of infrared radiation through the window assembly 10.

The transparent layer 24 is preferably formed from a coating. As used herein, the term "transparent layer" may include one or more coatings and/or films of selected composition. The coatings and/or films forming the transparent layer 24 may be single or multiple layers. The transparent layer 24 may be disposed in the window assembly 10 according to any suitable method, such as chemical vapor deposition, magnetron sputter vapor deposition, spray pyrolysis, and the like.

The transparent layer 24 includes a metal compound such that the transparent layer 24 is electrically conductive. As mentioned herein, the term "electrically conductive" refers generally to a material, such as a conductor, exhibiting low electrical resistivity for effectively allowing flow of electric current through the material. Preferably, the metal compound includes a metal oxide. However, the metal compound may also include a metal nitride, and the like. The metal oxide may include a tin oxide, such as indium tin oxide, or the like. However, the transparent layer 24 may include other metal oxides, including, but not limited to, silver oxide. The metal compound may also be doped with an additive, such as fluorine. Specifically, the additive may be included in the metal compound to optimize the light transmittance and electrical resistivity of the transparent layer 24. The transparent layer 24 preferably has a sheet resistance in a range between 0.5-20 Ω/square. More preferably, the transparent layer 24 has a sheet resistance of approximately 2 Ω/square. The sheet resistance may also be known as a surface resistance of the transparent layer 24.

The transparent layer 24 defines an area 26 covering the window assembly 10. As shown in FIGS. 3-5, the area 26 may cover a majority of the window assembly 10. Specifically, the majority of the window assembly 10 is defined as greater than 50 percent of the window assembly 10. More typically, the majority is greater than 75 percent of the window assembly 10. Generally, the area 26 transparent layer 24 covers the majority of the window assembly 10 for maximizing the reduction of transmission of infrared radiation through the window assembly 10. However, it is to be appreciated that the area 26 of the transparent layer 24 may cover a minority of the window assembly 10. For example, the area 26 may cover 20 percent of the window assembly 10 along the upper portion of the window assembly 10. The area 26 generally defines a shape substantially similar to the first peripheral boundary 22. However, the area 26 may have any suitable shape for covering the window assembly 10.

The area 26 of the transparent layer 24 defines a second peripheral boundary 28. The second peripheral boundary 28 is defined by a boundary or perimeter of the area 26. An outer region 30 is defined on the window assembly 10 between the first and second peripheral boundaries 22, 28. The outer region 30 is devoid of the transparent layer 24 and is therefore, electrically non-conductive. The outer region 30 has a width defined as a distance between the first and second peripheral boundaries 22, 28. Preferably, the width is greater than 0 mm and less than 200 mm. The width of the outer region 30 may vary depending upon how the window assembly 10 is fitted to the window frame 14 of the vehicle 12. Specifically, the outer region 30 may have the width equal to an overlap between the window frame 14 and the window assembly 10. However, the outer region 30 may separate the transparent layer 24 from the window frame 14 of the vehicle 12 to avoid the possibility of an electrical path between the transparent layer 24 and the window frame 14, which may adversely affect the efficiency and radiation pattern of the transparent antenna element 16. Furthermore, the outer region 30 may protect the transparent layer 24 by separating the transparent layer 24 from the first peripheral boundary 22, which is subjected to environmental factors, which may degrade the quality of the transparent layer 24.

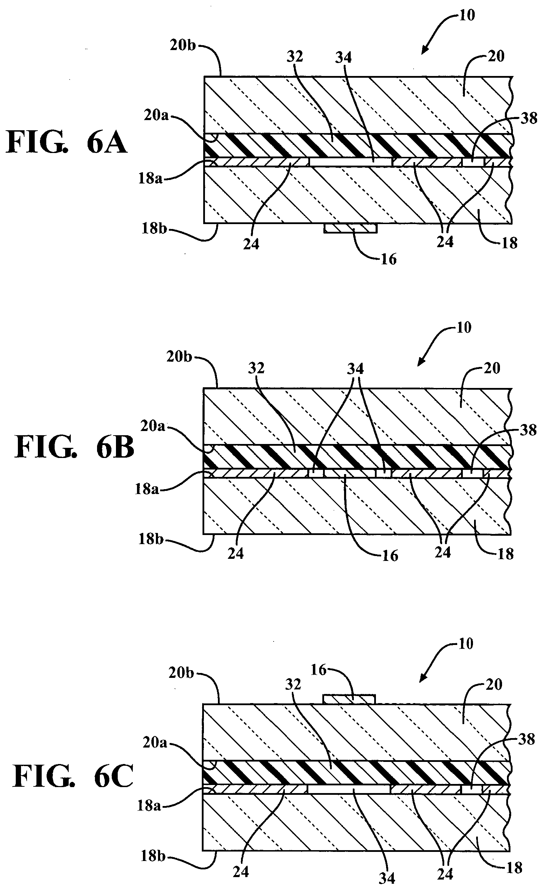

Although not required, an interlayer 32 may be disposed between the inner surfaces 18a, 20a of the exterior and interior substrates 18, 20, as illustrated in FIGS. 6a-6f. In other words, the window assembly 10 may include the exterior and interior substrates 18, 20 having the transparent layer 24 and the interlayer 32 sandwiched therebetween. Preferably, the interlayer 32 bonds the exterior and interior substrates 18, 20 and prevents the window assembly 10 from shattering upon impact. Furthermore, the interlayer 32 typically is substantially transparent to light and includes a polymer or thermoplastic resin, such as polyvinyl butyral (PVB). However, other suitable materials for implementing the interlayer 32 may be used. Conventionally, the interlayer 32 has a thickness of between 0.5 mm to 1 mm.

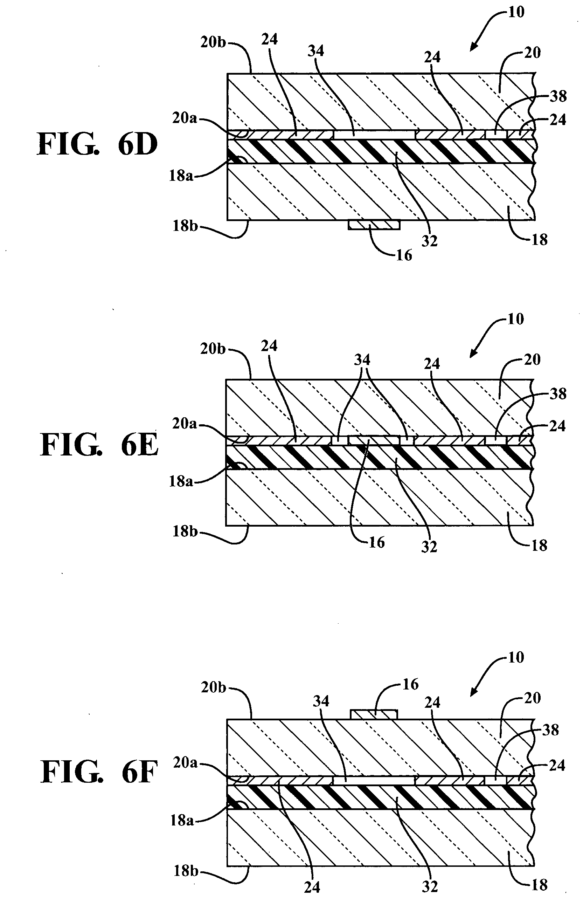

The transparent layer 24 may be disposed adjacent the interlayer 32. More specifically, the transparent layer 24 may be disposed between the interlayer 32 and the inner surface 18a of the exterior substrate 18, as shown in FIGS. 6a-6c. Alternatively, as shown in FIGS. 6d-6f, the transparent layer 24 may be disposed between the interlayer 32 and the inner surface 20a of the interior substrate 20. Preferably, the window assembly 10 includes the transparent layer 24 and interlayer 32 sandwiched between the exterior and interior substrates 18, 20 such that the interlayer 32 and the transparent layer 24 are abutting the inner surfaces 18a, 20a of the exterior and/or interior substrates 18, 20. Although not shown in the Figures, it is to be appreciated that the transparent layer 24 may be embedded within the interlayer 32 such that the transparent layer 24 is sandwiched between the interlayer 32 on both sides.

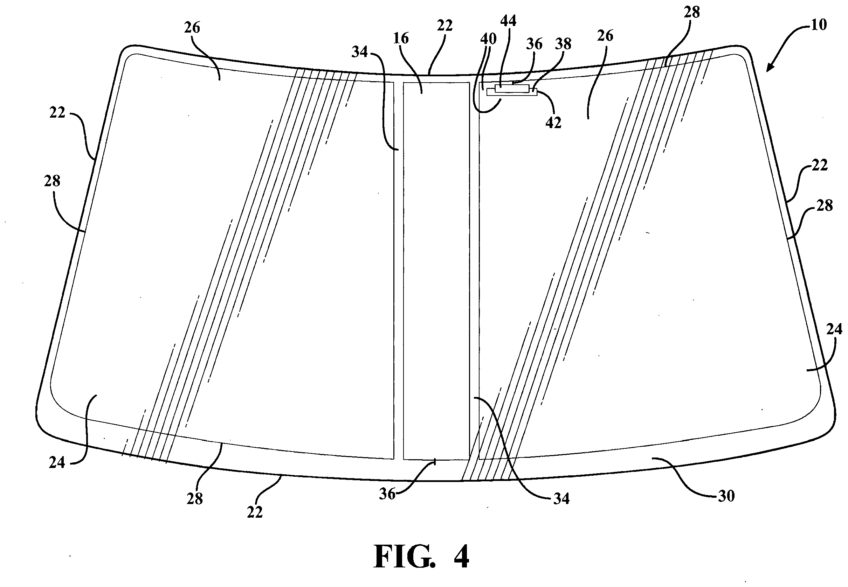

As shown generally throughout the Figures, a slot 34 is defined by the area 26. The slot 34 opens into the outer region 30. The slot 34 is devoid of the transparent layer 24 and electrically non-conductive. The slot 34 opens into the outer region 30 such that the slot 34 and the outer region 30 may form an electrically non-conductive region. However, it is to be appreciated that the slot 34 and the outer region 30 are generally distinct regions on the window assembly 10. As recited above, the outer region 30 is defined between the first and second peripheral boundaries 22, 28. However, it is to be appreciated that the second peripheral boundary 28 separates the slot 34 from the outer region 30. Thus, the slot 34 is defined by the area 26 within the second peripheral boundary 28 such that the slot 34 is generally defined independent of other electrically conductive components, such as the vehicle 12 body, or the like. As such, the second peripheral boundary 28 typically excludes boundaries of the transparent layer 24 defining the slot 34 within the area 26. In other words, it is preferred that the second peripheral boundary 28 be continuously adjacent the outer region 30 despite interruption of the peripheral boundary 28 by the slot 34. As such, as shown in the embodiment of FIG. 4 according to the present invention, it is to be appreciated that the area 26 of the transparent layer 24 is preferably not sub-divided into separate independent areas, but rather the area 26 remains unitary within the second peripheral boundary 22.

As described above, the transparent antenna element 16 transmits or receives linearly or circularly polarized RF signals. The transparent antenna element 16 typically includes a transparent coating, which is electrically conductive. The transparent coating may be of the same type as the transparent layer 24. As such, the transparent antenna element 16 may also have sheet resistance in a range between 0.5-20 Ω/square. It is to be appreciated that the transparent coating may also be a transparent film, or the like. The transparent antenna element 16 is substantially transparent to light such that light readily passes through the transparent antenna element 16. The transparent antenna element 16 has a visible light transmittance of generally greater than 60 percent. As such, the transparent antenna element 16 does not obstruct the field of view of the driver or occupant within the vehicle 12.

The transparent antenna element 16 may have any suitable configuration. Preferably, for transmitting or receiving linearly polarized RF signals, the transparent antenna element 16 has a monopole or dipole configuration, according to the illustrative example of FIG. 1. The transparent antenna element 16 may have a predetermined length or area correlating to a predetermined wavelength of radio waves intended to be transmitted or received by the transparent antenna element 16. The transparent antenna element 16 may have other configurations such as a patch or a slot antenna configuration. Alternatively, the transparent antenna element 16 may be included as a subcomponent of a more complex antenna assembly. The transparent antenna element 16 may be of any other suitable configuration not shown throughout the Figures.

The transparent antenna element 16 is disposed within the slot 34. Within the slot 34, the transparent antenna element 16 is neither directly abutting nor in direct electrical contact with the transparent layer 24. Furthermore, as illustrated in FIGS. 2b, 6b, and 6e, the transparent antenna element 16 may be disposed coplanar with respect to the transparent layer 24. In other words, the transparent antenna element 16 may be disposed within the slot 34 on the same layer in the window assembly 10 as the transparent layer 24. Alternatively, as shown in FIGS. 2a, 2c, 6a, 6c, 6d, and 6f, the transparent antenna element 16 may be disposed non-coplanar with respect to the transparent layer 24. In such instances, the transparent antenna element 16 is disposed within the slot 34 but on a different layer in the window assembly 10 than the transparent layer 24.

Still, the transparent antenna element 16 may simultaneously be disposed coplanar and non-coplanar with respect to the transparent layer 24. Specifically, one portion of the transparent antenna element 16 may be disposed on the same layer in the window assembly 10 as the transparent layer 24, while another portion of the transparent antenna element 16 is disposed on another layer in the window assembly 10. For example, one portion of the transparent antenna element 16 may be disposed coplanar with respect to the transparent layer 24 and the other portion of the transparent antenna element 16 disposed on the outer surface 20b of the interior substrate 20. Alternatively, one portion of the transparent antenna element 16 may be disposed coplanar with respect to the transparent layer 24 while the other portion extends into the interlayer 32. The transparent antenna element 16 may extend into the interlayer 32 or extend into one of the exterior and interior substrates 18, 20. It is to be appreciated that the transparent antenna element 16 may be disposed non-coplanar with respect to the transparent layer 24 and still be disposed within the slot 34.

Furthermore, the transparent antenna element 16 may be partially disposed within the outer region 30. As mentioned above, the slot 34 opens into the outer region 30 and is generally separated from the outer region 30 by the second peripheral boundary 28. Therefore, part of the transparent antenna element 16 may be disposed in the outer region 30 and another part may still be disposed within the slot 34. Furthermore, the slot 34 and the outer region 30 are both electrically non-conductive. Therefore, in such instances, the transparent antenna element 16 is generally not exposed to electromagnetic interference presented by the transparent layer 24. Specifically, the transparent antenna element 16 is still neither directly abutting nor in direct electrical contact with the transparent layer 24.

The slot 34 may have any suitable dimensions, configuration, or shape for accommodating the transparent antenna element 16. For instance, the slot 34 may have a linear configuration, a curved configuration, or the like. Preferably, the slot 34 is sized such that the transparent antenna element 16 substantially occupies the slot 34. In other words, it is preferable for the transparent layer 24 to be removed or deleted to the extent to effectively accommodate the transparent antenna element 16. As such, the area 26 of the transparent layer 24 is maximized for other functions, such as absorbing infrared radiation penetrating the window assembly 10. Alternatively, the transparent antenna element 16 may occupy only a minority of the slot 34.

In the embodiment according to the present invention as illustrated in FIG. 4 the slot 34 opens into the outer region 30 at two independent locations along the second peripheral boundary 28 of the area 26. As such, the slot 34 generally interrupts the second peripheral boundary 28 at the two independent locations. In such instances, the slot 34 may extend through a center of the area 26 thereby bisecting the area 26 equally within the second peripheral boundary 28. Alternatively, the slot 34 may interrupt the second peripheral boundary 28 at the two independent locations such that the area 26 is bisected unequally within the second peripheral boundary 28.

The window assembly 10 may also include a plurality of slots 34. Each of the plurality of slots 34 may be utilized to accommodate a separate transparent antenna element 16 on the window assembly 10. The plurality of slots 34 may intersect one another so as to form a common electrically non-conductive region between the plurality of slots 34 and the outer region 30. Alternatively, the plurality of slots 34 may be independent of each other such that each slot 34 does not intersect one another. Additionally, the plurality of slots 34 may split the area 26 into a plurality of independent sub-areas within the second peripheral boundary 28. A transparent antenna element 16 may be disposed within the plurality of slots 34. Alternatively, a plurality of transparent antenna elements 16 may be disposed within one or the plurality of slots 34.

The slot 34 may be formed on the window assembly 10 according to any suitable technique known in the art. For instance, the inner surfaces 18a, 20a of one of the exterior and interior substrates 18, 20 may be masked before application of the transparent layer 24 to provide a desired shape of the slot 34. Alternatively, the transparent layer 24 may first be applied to the window assembly 10. Thereafter, selected portions of the transparent layer 24 may be removed or deleted to provide the desired shape of the slot 34. Removal or deletion of selected portions of the transparent layer 24 may be accomplished using lasers, abrasive tools, chemical removal, and the like.

While disposed within the slot 34, the transparent antenna element 16 may be arranged according to several configurations with respect to the transparent layer 24, interlayer 32, and substrates 18, 20 of the window assembly 10. In instances where the window assembly 10 is absent the interlayer 32, the transparent antenna element 16 may be disposed within the slot 34 between the exterior and interior substrates 18, 20 of the window assembly 10 as shown in FIG. 2b. In FIG. 2b, the transparent antenna element 16 is coplanar with respect to the transparent layer 24. As shown in FIG. 2a, the transparent antenna element 16 may be disposed within the slot 34 on the outer surface 20b of the interior substrate 20 of the window assembly 10. As shown in FIG. 2c, the transparent antenna element 16 may be disposed within the slot 34 on the outer surface 18b of the exterior substrate 18 of the window assembly 10. In the illustrative arrangements of FIGS. 2a and 2c, the transparent antenna element 16 is non-coplanar with respect to the transparent layer 24.

Where the window assembly 10 has the interlayer 32 disposed between the transparent layer 24 and the inner surface 20a of the interior substrate 20, FIG. 6b shows the transparent antenna element 16 disposed within the slot 34 between the interlayer 32 and the inner surface 18a of the exterior substrate 18, according to one illustrative arrangement. Alternatively, as shown in FIG. 6c, the transparent antenna element 16 is disposed within the slot 34 on the outer surface 20b of the interior substrate 20. In another illustrative arrangement, as shown in FIG. 6a, the transparent antenna element 16 is disposed within the slot 34 on the outer surface 18b of the exterior substrate 18. The transparent antenna element 16 is coplanar with respect to the transparent layer 24 in FIG. 6b, and non-coplanar with respect to the transparent layer 24 in FIGS. 6a and 6c.

Where the window assembly 10 has the interlayer 32 disposed between the transparent layer 24 and the inner surface 18a of the exterior substrate 18, FIG. 6e shows the transparent antenna element 16 disposed within the slot 34 between the interlayer 32 and the inner surface 20a of the interior substrate 20, according to one illustrative arrangement. In another illustrative arrangement, as shown in FIG. 6d, the transparent antenna element 16 is disposed within the slot 34 on the outer surface 18b of the exterior substrate 18. The transparent antenna element 16 may also be disposed within the slot 34 on the outer surface 20b of the interior substrate 20, as shown in FIG. 6f. The transparent antenna element 16 is coplanar with respect to the transparent layer 24 in FIG. 6e, and non-coplanar with respect to the transparent layer 24 in FIGS. 6d and 6f.

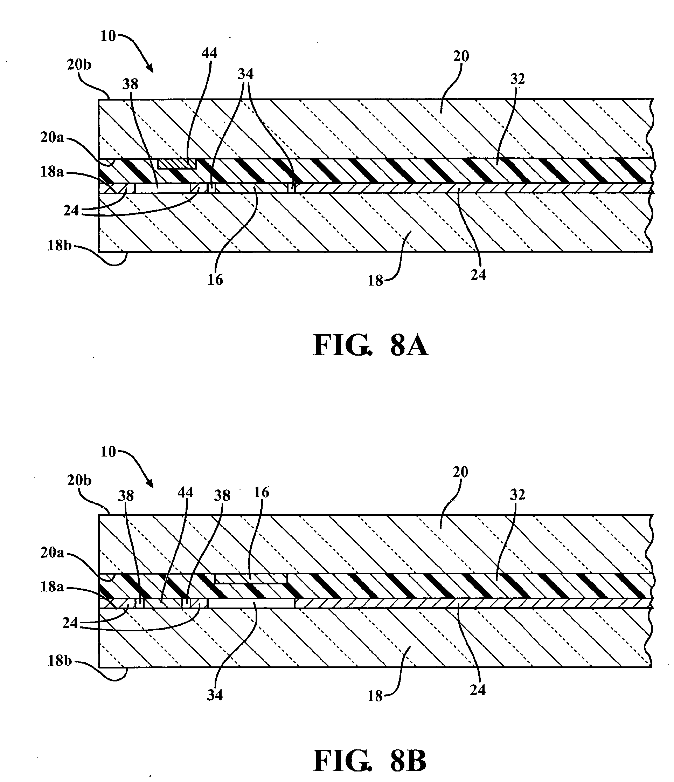

Furthermore, the transparent antenna element 16 may be embedded within the interlayer 32. In one illustrative arrangement, as shown in FIG. 8b, the transparent antenna element 16 is embedded within the interlayer 32 and disposed adjacent to the inner surface 20a of the interior substrate 20. The transparent antenna element 16 may also be embedded within the interlayer 32 and disposed adjacent to the inner surface 18a of the exterior substrate 18. Additionally, it is to be appreciated that the transparent antenna element 16 may embedded within the interlayer 32 such that the transparent antenna element 16 is sandwiched between the interlayer 32.

As shown generally throughout the Figures, the window assembly 10 includes a feeding element 36 coupled to the transparent antenna element 16 for energizing the transparent antenna element 16. With respect to the feeding element 36, the term "energize" is understood to describe an electrical relationship between the feeding element 36 and the transparent antenna element 16 whereby the feeding element 36 excites the transparent antenna element 16 for transmission of radio waves, and is electrically coupled to the transparent antenna element 16 for reception of impinging radio waves by the transparent antenna element 16. The feeding element 36 may include any suitable material for energizing the transparent antenna element 16. For instance, the feeding element 36 may include a feeding strip, a feeding wire, or a combination of both. Also, the feeding element 36 may be a balanced or unbalanced line. For example, the feeding element 36 may be an unbalanced coaxial cable, microstrip, or single wire line. Furthermore, the feeding element 36 may include any suitable feeding network for providing phase shifting to the RF signal transmitted or received by the transparent antenna element 16. In addition, the feeding element 36 may include a transparent coating of the same type as the transparent layer 24 and/or the transparent antenna element 16. Additionally, a plurality of feeding elements 36 may be coupled to one or more transparent antenna elements 16 for energizing one or more transparent antenna elements 16. The feeding element 36 is generally disposed on the inner surface 18a, 20a or outer surface 18b, 20b of one of the exterior and interior substrates 18, 20 of the window assembly 10. However, it is to be appreciated that the feeding element 36 may be disposed on any layer of the window assembly 10. Furthermore, the feeding element 36 may be disposed coplanar or non-coplanar with respect to the transparent antenna element 16.

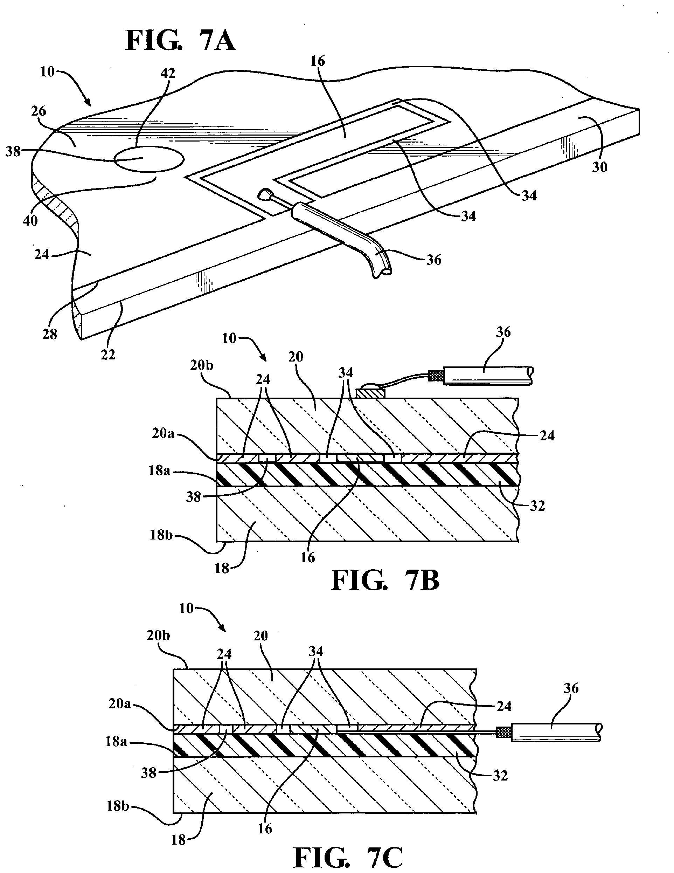

According to one illustrative arrangement, as shown in FIG. 7c, the feeding element 36 abuts and is in direct electrical connection with the transparent antenna element 16. Thus, the feeding element 36 may be directly wired or soldered to the transparent antenna element 16. The feeding element 36 passes electrical current to the transparent antenna element 16 directly through an electrically conductive material, such as a feeding strip or wire, physically attached to the transparent antenna element 16. It is to be appreciated that the feeding element 36 and the transparent antenna element 16 may be abutting and in direct electrical connection on the window assembly 10 according to several other configurations with respect to the transparent layer 24 and the interlayer 32 not specifically illustrated throughout the Figures.

Alternatively, as shown in FIG. 7b, the feeding element 36 may be spaced from and capacitively coupled to the transparent antenna element 16. In particular, the feeding element 36 induces current to the transparent antenna element 16 through the air or a dielectric material, such as the exterior or interior substrates 18, 20. In such illustrative arrangement, the feeding element 36 is neither directly wired nor in direct contact with the transparent antenna element 16 and is generally disposed non-coplanar with the transparent antenna element 16. It is to be appreciated that the feeding element 36 may be spaced from and capacitively coupled to the transparent antenna element 16 on the window assembly 10 according to several other illustrative arrangements with respect to the transparent layer 24 and the interlayer 32 not specifically illustrated throughout the Figures.

In one illustrative arrangement, the feeding element 36 overlaps the slot 34. Specifically, the feeding element 36 may be disposed entirely within the slot 34 for energizing the transparent antenna element 16. In one illustrative arrangement, the feeding element 36 may be partially overlapping the outer region 30 and partially overlapping the slot 34. In such instances, the feeding element 36 may overlap the transparent layer 24. However, such overlap is merely incidental to positioning of the feeding element 36 on the window assembly 10 and the feeding element 36 is generally not operatively coupled to the transparent layer 24, as will be described below. Alternatively, the feeding element 36 may be disposed entirely within the outer region 30 such that the feeding element 36 is not disposed within the slot 34, as shown in FIGS. 3-5.

The transparent antenna element 16 is electrically disconnected from the transparent layer 24 such that the transparent antenna element 16 operates independent of the transparent layer 24. As mentioned above, the transparent antenna element 16 is disposed within the slot 34 such that the transparent antenna element 16 is neither directly abutting nor in direct electrical contact with the transparent layer 24. Additionally, the transparent antenna element 16 is neither wired nor soldered to the transparent layer 24. Thus, in some instances, the transparent antenna element 16 transmits and/or receives radio waves independent of the transparent layer 24. Said differently, the transparent layer 24 is not an active antenna element operatively coupled to the transparent antenna element 16. Generally, radio waves transmitted or received by the transparent antenna element 16 are not operatively channeled through the transparent layer 24.

Furthermore, the transparent antenna element 16 may also be capacitively decoupled from the transparent layer 24. In other words, the transparent antenna element 16 may be decoupled from the transparent layer 24 such that the transparent layer 24 does not function as an active antenna element. It is to be appreciated that the transparent layer 24 may be parasitically coupled to the transparent antenna element 16 as the transparent antenna element 16 is energized. However, such parasitic coupling may merely be incidental and it is to be appreciated that the transparent antenna element 16 still operates independent of the transparent layer 24.

Accordingly, the slot 34 enables uninterrupted transmission and/or reception of radio waves by the transparent antenna element 16 as the transparent antenna element 16 is energized on the window assembly 10. Simultaneously, the transparent antenna element 16 operates generally free of the transparent layer 24. Furthermore, the area 26 of the transparent layer 24 is maximized and the transparent layer 24 may still effectively function for other purposes, such as a defogging or a defrosting element, an infrared radiation absorbing material, and the like.

As mentioned above, the feeding element 36 is coupled to the transparent antenna element 16. However, it is preferred that the feeding element 36 be electrically disconnected from the transparent layer 24 such that the feeding element 36 energizes the transparent antenna element 16 independent of the transparent layer 24. Preferably, the feeding element 36 is not directly wired to the transparent layer 24. Instead, it is preferred that the feeding element 36 is electrically connected to the transparent antenna element 16 generally independent of the transparent layer 24. However, the feeding element 36 may be abutting and in direct connection with the transparent layer 24 for purposes such as utilizing the transparent layer 24 as a ground reference, or the like.

Additionally, the feeding element 36 is preferably capacitively decoupled from the transparent layer 24. As such, the feeding element 36 generally is not spaced from and capacitively coupled to the transparent layer 24 to energize the transparent layer 24 as an active antenna element. However, it is to be appreciated that the feeding element 36 may incidentally or parasitically be capacitively coupled to the transparent layer 24. Also, it is to be appreciated that the feeding element 36 may be electrically connected to other components such as the vehicle 12 body, and the like.

As shown throughout the Figures, an opening 38 is defined within the area 26 and spaced from the slot 34. The opening 38 is devoid of the transparent layer 24 and electrically non-conductive. In particular, the opening 38 is defined by a portion 40 of the transparent layer 24. Specifically, the portion 40 defines a perimeter 42 of the opening 38. As such, the portion 40 is adjacent to the opening 38. The portion 40 may be any suitable part of the transparent layer 24 defining the perimeter 42 of the opening 38. The opening 38 is spaced from the slot 34 such that the transparent layer 24 is disposed between the opening 38 and the slot 34. In other words, the opening 38 is generally isolated from the slot 34.

In one illustrative arrangement, as shown in FIG. 3, the opening 38 may open into the outer region 30. However, it is to be appreciated that the opening 38 and the outer region 30 are generally distinct regions on the window assembly 10. Therefore, in such arrangement, the second peripheral boundary 28 typically excludes the perimeter 42 defined by the portion 40 of the transparent layer 24. Thus, it is preferred that the second peripheral boundary 28 be continuously adjacent the outer region 30 despite interruption of the peripheral boundary 28 by the opening 38. The opening 38 may open into the outer region 30 from any suitable location within the area 26. The opening 38 opens into the outer region 30 at two independent locations along the second peripheral boundary 28 of the area 26. As such, the opening 38 generally interrupts the second peripheral boundary 28 at the two independent locations. In such instances, the opening 38 may extend through the area 26 thereby splitting the area 26 within the second peripheral boundary 28.

In another illustrative arrangement, as shown in FIGS. 1, 5, 7 and according to the embodiment of the present invention, the opening 38 may be defined within and surrounded by the area 26 of the transparent layer 24. Thus, the opening 38 is spaced from and isolated from the outer region 30 such that the opening 38 does not open into the outer region 30. In other words, the transparent layer 24 is disposed between the outer region 30 and the opening 38 such that the opening 38 does not interrupt the second peripheral boundary 28. In such instances, the opening 38 is enclosed on all sides by the transparent layer 24. Furthermore, the opening 38 is defined generally independent of other electrically conductive components, such as the vehicle 12 body, or the like. The opening 38 may be defined within the area 26 at any suitable location of the window assembly 10.

The opening 38 may be formed on the window assembly 10 according to any suitable technique known in the art. As mentioned above with reference to the slot 34, the inner surfaces 18a, 20a of one of the exterior and interior substrates 18, 20 may be masked before application of the transparent layer 24 to provide a desired shape of the opening 38. Alternatively, the transparent layer 24 may first be applied to the window assembly 10. Thereafter, selected parts of the transparent layer 24 may be removed or deleted to provide the desired shape of the opening 38.

The portion 40 of the transparent layer 24 defining the perimeter 42 of the opening 38 may be capacitively coupled to the transparent antenna element 16 such that the portion 40 is a parasitic element with respect to the transparent antenna element 16. Where the portion 40 is a parasitic element, the portion 40 and the opening 38 do not actively excite RF waves. In such instances, the portion 40 and the opening 38 are neither electrically energized nor electrically connected to a transmitter or receiver. When the transparent antenna element 16 is employed to transmit or receive radio waves, the portion 40 may capacitively couple to the transparent antenna element 16 to passively alter the radiation pattern of the transparent antenna element 16. That is, the transparent antenna element 16 may be subjected to electromagnetic interference from various electrical and mechanical systems of the vehicle 12 which may adversely alter the radiation pattern of the transparent antenna element 16. The portion 40 defining the opening 38 may be provided to control adverse effects acting on the radiation pattern. Specifically, electromagnetic waves excited from or directed towards the transparent antenna element 16 may resonate within the perimeter 42 of the opening 38. As such, the portion 40 alters impedance characteristics of the transparent antenna element 16 which may be used for improving tuning and radiation efficiency of the transparent antenna element 16. It is to be appreciated that the portion 40 may also capacitively couple to the vehicle 12, the window frame 14, or other antennas employed by the vehicle 12 to assist in alter radiation patterns of other antennas.

When the portion 40 is a parasitic element, the perimeter 42 of the opening 38 may have any suitable dimensions, configuration, or shape. In one illustrative arrangement, as shown in FIG.1, the perimeter 42 of the opening 38 has a substantially square configuration. Additionally, in FIG. 7a, the perimeter 42 of the opening 38 has a substantially circular configuration. However, it is to be appreciated that the perimeter 42 of the opening 38 may have various other configurations which may depend upon various factors, such as the characteristics of the transparent antenna element 16, the frequency desired to be transmitted or received by the transparent antenna element 16, and the like.

It is to be appreciated that a plurality of openings 38 may be defined by a plurality of portions 40 of the transparent layer 24. Specifically, the plurality of openings 38 may be spaced from one another in the vicinity of the transparent antenna element 16. The plurality of openings 38 allow for additional degrees of freedom to control the radiation pattern of the transparent antenna element 16. Additionally, the plurality of openings 38 provide greater flexibility with respect to tuning or impedance matching of other antennas employed by the vehicle, and the like.

As shown in FIGS. 3-5 and 8, a supplemental antenna element 44 which is different from the transparent antenna element 16 may be disposed in the opening 38. The supplemental antenna element 44 typically transmits or receives linearly or circularly polarized RF signals. The supplemental antenna element 44 may transmit or receive signals in frequency ranges similar to or different than the transparent antenna element 16.

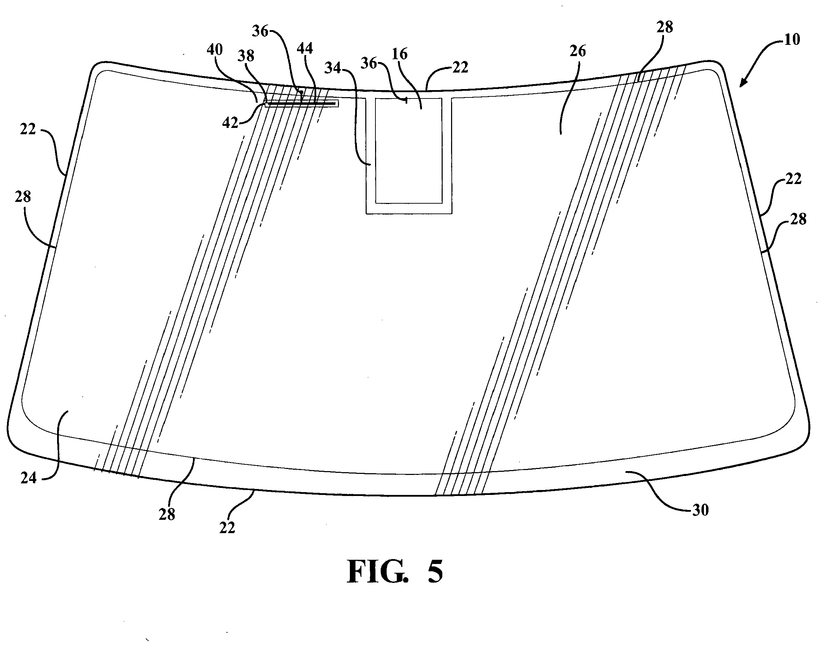

The supplemental antenna element 44 may include metal wire, as shown specifically in FIGS. 3, 5, and 8a. As used herein, the term "wire" refers generally to at least one strand or rod of metal. Typically, the strands or rods are flexible and are formed of copper, or other conductive metals. However, the supplemental antenna element 44 may also be formed of an electrically conductive paste, such as a silver paste. The supplemental antenna element 44 which includes metal wire may be applied to the window assembly 10 according to any suitable method, such as printing, firing, and the like. The supplemental antenna element 44 may have a predetermined diameter and length correlating to a predetermined wavelength of radio waves intended to be transmitted or received by the supplemental antenna element 44. Typically, supplemental antenna element 44 which includes metal wire is substantially opaque to light such that light cannot pass through supplemental antenna element 44. The supplemental antenna element 44 may have any suitable configuration for transmitting and/or receiving RF signals. For instance, the supplemental antenna element 44 may have a monopole or dipole configuration of the type shown in FIGS. 3 and 5, respectively. Furthermore, the supplemental antenna element 44 including metal wire may have a loop or meander line configuration. In addition, the supplemental antenna element 44 may be included as a subcomponent of a more complex antenna assembly.

Additionally, as shown specifically in FIGS. 4 and 8b, the supplemental antenna element 44 may include a transparent coating which is electrically conductive. The transparent coating may be of the same type as the transparent layer 24 or transparent antenna element 16. It is to be appreciated that the transparent coating may also be a transparent film, or the like. In addition, the supplemental antenna element 44 may include a combination of metal wire and transparent coating. The supplemental antenna element 44 which includes the transparent coating may have any suitable configuration such as a monopole or dipole configuration. The supplemental antenna element 44 may also have other configurations such as a patch or a slot antenna configuration. The supplemental antenna element 44 may be of any other suitable configuration not shown throughout the Figures.

As shown in FIGS. 4, 5, and 8a, the supplemental antenna element 44 overlaps the transparent layer 24 and overlaps the opening 38. In other words, the supplemental antenna element 44 is disposed on or in the window assembly 10 with one part of the supplemental antenna element 44 overlapping the area 26 of the transparent layer 24 and another part of the supplemental antenna element 44 overlapping the opening 38. As used herein, the term "overlap" is meant generally to describe a spatial relationship between components of the window assembly 10, e.g., the transparent layer 24 and the supplemental antenna element 44, whereby one of the components is disposed behind or in front of the other component as seen through the window assembly 10 from the perspective of a driver or occupant of the vehicle 12. Accordingly, the one part of the supplemental antenna element 44 overlaps the transparent layer 24, which is electrically conductive. Simultaneously, the other part of the supplemental antenna element 44 overlaps the opening 38, which is electrically non-conductive. In FIGS. 5 and 8a, the supplemental antenna element 44 which includes metal wire overlaps the opening 38. In FIG. 4, the supplemental antenna element 44 which includes the transparent coating overlaps the opening 38. It is to be appreciated that any suitable part of the supplemental antenna element 44 may overlap the transparent layer 24 or opening 38. For instance, one part representing 75 percent of the supplemental antenna element 44 may overlap the opening 38, while another part representing 25 percent of the supplemental antenna element 44 may overlap the transparent layer 24, or vice-versa.

While overlapping the opening 38, the supplemental antenna element 44 may be disposed at least partially in the outer region 30. In other words, part of the supplemental antenna element 44 overlaps the transparent layer 24 and the opening 38 while another part of the supplemental antenna element 44 extends into the outer region 30. In so doing, the supplemental antenna element 44 may extend across the transparent layer 24 such that the supplemental antenna element 44 crosses the second peripheral boundary 28 into the outer region 30. The outer region 30 may accommodate part of the supplemental antenna element 44 for providing easy access for electrical connections to the supplemental antenna element 44

As shown in FIG. 8a, the supplemental antenna element 44 is spaced from and not directly abutting the transparent layer 24 while overlapping the opening 38. Thus, the supplemental antenna element 44 is disposed non-coplanar with respect to the transparent layer 24. In other words, the supplemental antenna element 44 is disposed on a different layer of the window assembly 10 than the transparent layer 24. The supplemental antenna element 44 may still overlap the transparent layer 24 while disposed on a different layer of the window assembly 10 than the transparent layer 24. Said differently, the transparent layer 24 and the supplemental antenna element 44 are separated by the interlayer 32 and/or one of the exterior and interior substrates 18, 20. As such, the supplemental antenna element 44 and the transparent layer 24 are in a non-contacting state.

Alternatively, the supplemental antenna element 44 may be directly abutting the transparent layer 24 while overlapping the opening 38. In other words, the transparent layer 24 and the supplemental antenna element 44 are directly contacting one another and are in a contacting state. More specifically, the supplemental antenna element 44 may be disposed between the transparent layer 24 and the inner surface 20a of the interior substrate 20. Alternatively, the supplemental antenna element 44 may be disposed between the transparent layer 24 and the inner surface 18a of the exterior substrate 18.

Accordingly, in instances where the supplemental antenna element 44 overlaps the opening 38, the opening 38 enables uninterrupted transmission and/or reception of RF waves by the supplemental antenna element 44 as the supplemental antenna element 44 is energized on the window assembly 10. Simultaneously, the transparent layer 24 improves the performance of the supplemental antenna element 44 by modifying the radiation pattern of the supplemental antenna element 44. Furthermore, the area 26 of the transparent layer 24 is maximized and the transparent layer 24 may still function for other purposes, such as a defrosting or a defogging element, an infrared radiation absorbing material, and the like. Additionally, the supplemental antenna element 44 may be included with the window assembly 10 in instances where there would otherwise be minimal or no space available on the window assembly 10 for the supplemental antenna element 44 to function properly without being subjected to interference by the transparent layer 24.

As shown in FIGS. 3 and 8b, the supplemental antenna element 44 is disposed in the opening 38 but electrically disconnected from the transparent layer 24 such that the supplemental antenna element 44 operates independent of the transparent layer 24. The supplemental antenna element 44 is disposed within the opening 38 such that the supplemental antenna element 44 is neither directly abutting nor in direct electrical contact with the transparent layer 24. Additionally, the supplemental antenna element 44 is neither wired nor soldered to the transparent layer 24. In FIG. 3, the supplemental antenna element 44 which includes metal wire is disposed in the opening 38 but electrically disconnected from the transparent layer 24. On the other hand, FIG. 8b shows the supplemental antenna element 44 which includes transparent coating disposed in the opening 38 but electrically disconnected from the transparent layer 24. Therefore, in some instances, the supplemental antenna element 44 may transmit and/or receive radio waves independent of the transparent layer 24. Said differently, the transparent layer 24 is not an active antenna element operatively coupled to the supplemental antenna element 44. Generally, radio waves transmitted or received by the supplemental antenna element 44 are not operatively channeled through the transparent layer 24.

Accordingly, where the supplemental antenna element 44 is disposed in the opening 38 but electrically disconnected from the transparent layer 24, the opening 38 enables uninterrupted transmission and/or reception of radio waves by the supplemental antenna element 44 as the supplemental antenna element 44 is energized on the window assembly 10. Simultaneously, the supplemental antenna element 44 operates generally free of the transparent layer 24.

The opening 38 may have any suitable dimensions, configuration, or shape for accommodating the supplemental antenna element 44. For instance, the opening 38 may have a linear configuration, a curved configuration, or the like. Preferably, the opening 38 is sized such that the supplemental antenna element 44 substantially occupies the opening 38. In other words, it is preferable for the transparent layer 24 to be removed or deleted to the extent necessary to effectively accommodate the supplemental antenna element 44. As such, the area 26 of the transparent layer 24 is maximized for other functions, such as absorbing infrared radiation penetrating the window assembly 10. Alternatively, the supplemental antenna element 44 may occupy only a minority of the opening 38.

A plurality of openings 38 may be utilized to accommodate one or more separate supplemental antenna elements 44 on the window assembly 10. The plurality of openings 38 may intersect one another so as to form a common electrically non-conductive region within the second peripheral boundary 28. Alternatively, the plurality of openings 38 may be independent of each other such that each opening 38 is isolated from the other. One supplemental antenna element 44 may be disposed entirely within or overlap the plurality of openings 38. Alternatively, the plurality of supplemental antenna elements 44 may be disposed entirely within or overlap one or the plurality of openings 38.

While disposed entirely within, or overlapping the opening 38, the supplemental antenna element 44 may be arranged according to several configurations with respect to the transparent antenna element 16, the transparent layer 24, the interlayer 32, and substrates 18, 20 of the window assembly 10. The supplemental antenna element 44 may be disposed coplanar or non-coplanar with respect to the transparent antenna element 16. In addition, the supplemental antenna element 44 may be disposed coplanar or non-coplanar with respect to the transparent layer 24. Furthermore, the supplemental antenna element 44 may be disposed on the outer surface 18b, 20b of one of the exterior and interior substrates 18, 20. Alternatively, the supplemental antenna element 44 may be disposed between the exterior and interior substrates 18, 20 of the window assembly 10. Specifically, the supplemental antenna element 44 may be disposed between the interlayer 32 and the inner surface 18a, 20a, of one of the exterior and interior substrates 18, 20. Specifically, FIG. 8a shows the supplemental antenna element 44 overlapping the opening 38 while disposed between the interlayer 32 and the inner surface 20a of the interior substrate 20. Also, FIG. 8b shows the supplemental antenna element 44 disposed entirely within the opening 38 while disposed between the interlayer 32 and the inner surface 18a of the exterior substrate 18. Additionally, it is to be appreciated that the supplemental antenna element 44 may be embedded within or between the interlayer 32. The supplemental antenna element 44 may be disposed according to numerous embodiments with respect to the transparent antenna element 16, the substrates 18, 20, the transparent layer 24, and the interlayer 32, not specifically shown in the Figure 4.

While disposed entirely within, or overlapping the opening 38, a feeding element 36 may be coupled to the supplemental antenna element 44. Specifically, the feeding element 36 may be the same feeding element 36 energizing the transparent antenna element 16. More typically, the feeding element 36 coupled to the supplemental antenna element 44 is independent of the feeding element 36 energizing the transparent antenna element 16. As with the transparent antenna element 16, the feeding element 36 may abut and be in direct electrical connection with the supplemental antenna element 44. Alternatively, the feeding element 36 may be spaced from and capacitively coupled to the supplemental antenna element 44. However, it is to be appreciated that the supplemental antenna element 44 may be coupled to the feeding element 36 according to any other suitable configuration not specifically described herein.

Similar to the transparent antenna element 16, the supplemental antenna element 44 may simultaneously be disposed coplanar and non-coplanar with respect to the transparent layer 24. Specifically, the supplemental antenna element 44 may extend into other layers, such as the interlayer 32. Also, the supplemental antenna element 44 may extend through one of the exterior and interior substrates 18, 20 simultaneously while disposed entirely within or overlapping the opening 38.

Additionally, it is to be appreciated that the transparent antenna element 16 and the supplemental antenna element 44 may implement a diversity antenna system whereby the transparent antenna element 16 and the supplemental antenna element 44 are configured to transmit or receive signals in multiple directions within a field of reception. Specifically, the received signals from the transparent antenna element 16 and the supplemental antenna element 44 may be switched or combined to minimize interference and temporary fading of the signal.

The present invention has been described herein in an illustrative manner. It is to be understood that the terminology which has been used is intended to be in the nature of words of description rather than of limitation. Obviously, many modifications and variations of the invention are possible in light of the above teachings. The invention may be practiced otherwise than as specifically described within the scope of the appended claims.

## Claims

1. A window assembly (10) for a vehicle (12), said window assembly (10) comprising:
an exterior substrate (18) having an inner surface (18a) and an outer surface (18b); an interior substrate (20) disposed adjacent said exterior substrate (18) and having an inner surface (20a) and an outer surface (20b) with said interior and exterior substrates (18, 20) defining a first peripheral boundary (22);
a transparent layer (24) disposed between said inner surfaces (18a, 20a) of said exterior and interior substrates (18, 20) and defining an area (26) covering said window assembly (10) with said area (26) defining a second peripheral boundary (28), wherein said transparent layer (24) comprises a metal compound such that said transparent layer (24) is electrically conductive;
an outer region (30) defined on said window assembly (10) between said first and second peripheral boundaries (22, 28) and being electrically non-conductive;
a slot (34) defined by said area (26) and opening into said outer region (30) at two independent locations along said second peripheral boundary (28) of said area (26) with said slot (34) being devoid of said transparent layer (24) and electrically non-conductive;
a transparent antenna element (16) disposed within said slot (34), wherein said transparent antenna element (16) is electrically disconnected from said transparent layer (24) such that said transparent antenna element (16) operates independent of said transparent layer (24); and
a feeding element (36) coupled to said transparent antenna element (16) for energizing said transparent antenna element (16);
**characterized in that** an opening (38) is defined within said area (26) and spaced from said slot (34), wherein said opening (38) is devoid of said transparent layer (24) and electrically non-conductive, and wherein said opening (38) is distinct from said outer region (30), and wherein a supplemental antenna element (44) which is different from said transparent antenna element (16) is disposed in said opening (38) and wherein said supplemental antenna element (44) is electrically disconnected from said transparent layer (24) such that said supplemental antenna element (44) operates independent of said transparent layer (24).

2. A window assembly as set forth in claim 1 wherein a portion (40) of said transparent layer (24) defining a perimeter (42) of said opening (38) is capacitively coupled to said transparent antenna element (16) such that said portion (40) is a parasitic element with respect to said transparent antenna element (16).

3. A window assembly as set forth in any preceding claim wherein said opening (38) opens into said outer region (30).

4. A window assembly as set forth in claim 3 wherein said opening (38) opens into said outer region (30) at two independent locations along said second peripheral boundary (28) of said area (26).

5. A window assembly as set forth in any one of claims 1 and 2 wherein said opening (38) is defined within and surrounded by said area (26) of said transparent layer (24).

6. A window assembly as set forth in any preceding claim wherein said supplemental antenna element (44) is formed of metal wire.

7. A window assembly as set forth in any preceding claim wherein said supplemental antenna element (44) is formed of a transparent coating which is electrically conductive.

8. A window assembly as set forth in any preceding claim wherein said transparent antenna element (16) and said supplemental antenna element (44) implement a diversity antenna system.

9. A window assembly as set forth in any preceding claim wherein said transparent antenna element (16) is disposed coplanar with respect to said supplemental antenna element (44).

10. A window assembly as set forth in any preceding claim wherein said transparent antenna element (16) is disposed non-coplanar with respect to said supplemental antenna element (44).

11. A window assembly as set forth in any preceding claim wherein said transparent antenna element (16) is partially disposed within said outer region (30).

12. A window assembly as set forth in any preceding claim wherein said feeding element (36) is electrically disconnected from said transparent layer (24) such that said feeding element (36) energizes said transparent antenna element (16) independent of said transparent layer (24).

13. A window assembly as set forth in any preceding claim wherein said transparent antenna element (16) is disposed non-coplanar with respect to said transparent layer (24).

14. A window assembly as set forth in any preceding claim including an interlayer (32) disposed between said inner surfaces (18a, 20a) of said exterior and interior substrates (18, 20), wherein said transparent antenna element (16) is disposed between said interlayer (32) and said inner surface (18a, 20a) of one of said exterior and interior substrates (18, 20).

## Patentansprüche

1. Fensteranordnung (10) für ein Fahrzeug (12), wobei die Fensteranordnung (10) umfasst:
ein Außensubstrat (18), welches eine innere Oberfläche (18a) und eine äußere Oberfläche (18b) aufweist;
ein Innensubstrat (20), welches zum Außensubstrat (18) benachbart angeordnet ist und eine innere Oberfläche (20a) und eine äußere Oberfläche (20b) aufweist, wobei die Innen- und Außensubstrate (18, 20) eine erste periphere Begrenzung (22) definieren;
eine transparente Schicht (24), welche zwischen den inneren Oberflächen (18a, 20a) der Außen- und Innensubstrate (18, 20) angeordnet ist und eine Fläche (26) definiert, welche die Fensteranordnung (10) abdeckt, wobei die Fläche (26) eine zweite periphere Begrenzung (28) definiert, wobei die transparente Schicht (24) eine Metallverbindung umfasst, so dass die transparente Schicht (24) elektrisch leitfähig ist;
einen äußeren Bereich (30), welcher auf der Fensteranordnung (10) zwischen der ersten und der zweiten peripheren Begrenzung (22, 28) definiert und elektrisch nicht leitfähig ist;
einen Schlitz (34), welcher durch die Fläche (26) definiert ist und sich an zwei unabhängigen Stellen entlang der zweiten peripheren Begrenzung (28) der Fläche (26) in den äußeren Bereich (30) öffnet, wobei der Schlitz (34) frei von der transparenten Schicht (24) und elektrisch nicht leitfähig ist;
ein transparentes Antennenelement (16), welches in dem Schlitz (34) angeordnet ist, wobei das transparente Antennenelement (16) elektrisch von der transparenten Schicht (24) getrennt ist, so dass das transparente Antennenelement (16) unabhängig von der transparenten Schicht (24) funktioniert; und
ein Zuführelement (26), welches an das transparente Antennenelement (16) zum Speisen des transparenten Antennenelements (16) gekoppelt ist;
**dadurch gekennzeichnet, dass** eine Öffnung (38) in der Fläche (26) definiert und von dem Schlitz (34) beabstandet ist,
wobei die Öffnung (38) frei von der transparenten Schicht (24) und elektrisch nicht leitfähig ist, und wobei die Öffnung (38) von dem äußeren Bereich (30) verschieden ist, und wobei ein von dem transparenten Antennenelement (16) verschiedenes, ergänzendes Antennenelement (44) in der Öffnung (38) angeordnet ist und wobei das ergänzende Antennenelement (44) elektrisch getrennt ist von der transparenten Schicht (24), sodass das ergänzende Antennenelement (44) unabhängig von der transparenten Schicht (24) funktioniert.

2. Fensteranordnung wie dargelegt in Anspruch 1, wobei ein Abschnitt (40) der transparenten Schicht (24), welcher einen Umfang (42) der Öffnung (38) definiert, kapazitiv an das transparente Antennenelement (16) gekoppelt ist, so dass der Abschnitt (40) ein parasitäres Element bezüglich des transparenten Antennenelements (16) ist.

3. Fensteranordnung wie dargelegt in jedem vorhergehenden Anspruch, wobei sich die Öffnung (38) in den äußeren Bereich (30) öffnet.

4. Fensteranordnung wie dargelegt in Anspruch 3, wobei sich die Öffnung (38) an zwei unabhängigen Stellen entlang der zweiten peripheren Begrenzung (28) der Fläche (26) in dem äußeren Bereich (30) öffnet.

5. Fensteranordnung wie dargelegt in einem jeden der Ansprüche 1 und 2, wobei die Öffnung (38) innerhalb der Fläche (26) der transparenten Schicht (24) definiert und von dieser umgeben ist.

6. Fensteranordnung wie dargelegt in jedem vorhergehenden Anspruch, wobei das ergänzende Antennenelement (44) aus Metalldraht gebildet ist.

7. Fensteranordnung wie dargelegt in jedem vorhergehenden Anspruch, wobei das ergänzende Antennenelement (44) aus einer transparenten Beschichtung gebildet ist, welche elektrisch leitfähig ist.

8. Fensteranordnung wie dargelegt in jedem vorhergehenden Anspruch, wobei das transparente Antennenelement (16) und das ergänzende Antennenelement (44) ein Diversity-Antennensystem implementieren.

9. Fensteranordnung wie dargelegt in jedem vorhergehenden Anspruch, wobei das transparente Antennenelement (16) bezüglich des ergänzenden Antennenelements (44) koplanar angeordnet ist.

10. Fensteranordnung wie dargelegt in jedem vorhergehenden Anspruch, wobei das transparente Antennenelement (16) bezüglich des ergänzenden Antennenelements (44) nichtkoplanar angeordnet ist.

11. Fensteranordnung wie dargelegt in jedem vorhergehenden Anspruch, wobei das transparente Antennenelement (16) teilweise in dem äußeren Bereich (30) angeordnet ist.

12. Fensteranordnung wie dargelegt in jedem vorhergehenden Anspruch, wobei das Zuführelement (36) elektrisch von der transparenten Schicht (24) getrennt ist, so dass das Zuführelement (26) das transparente Antennenelement (16) unabhängig von der transparenten Schicht (24) speist.

13. Fensteranordnung wie dargelegt in jedem vorhergehenden Anspruch, wobei das transparente Antennenelement (16) bezüglich der transparenten Schicht (24) nichtkoplanar angeordnet ist.

14. Fensteranordnung wie dargelegt in jedem vorhergehenden Anspruch, aufweisend eine zwischen den inneren Oberflächen (18a, 20a) der Außen- und Innensubstrate (18, 20) angeordnete Zwischenschicht (32), wobei das transparente Antennenelement (16) zwischen der Zwischenschicht (32) und der inneren Oberfläche (18a, 20a) von einem aus den Außen- und Innensubstraten (18, 20) angeordnet ist.

## Revendications

1. Ensemble fenêtre (10) pour un véhicule (12), ledit ensemble fenêtre (10) comprenant :
un substrat extérieur (18) ayant une surface intérieure (18a) et une surface extérieure (18b) ;
un substrat intérieur (20) disposé de manière adjacente audit substrat extérieur (18) et ayant une surface intérieure (20a) et une surface extérieure (20b), lesdits substrats intérieur et extérieur (18, 20) définissant une première limite périphérique (22) ;
une couche transparente (24) disposée entre lesdites surfaces intérieures (18a, 20a) desdits substrats extérieur et intérieur (18, 20) et définissant une zone (26) couvrant ledit ensemble fenêtre (10), ladite zone (26) définissant une seconde limite périphérique (28), dans lequel ladite couche transparente (24) comprend un composé métallique de telle sorte que ladite couche transparente (24) est électroconductrice ;
une région extérieure (30) définie sur ledit ensemble fenêtre (10) entre lesdites première et seconde limites périphériques (22, 28) et étant non électroconductrice;
une fente (34) définie par ladite zone (26) et s'ouvrant dans ladite région extérieure (30) à deux emplacements indépendants le long de ladite seconde limite périphérique (28) de ladite zone (26), ladite fente (34) étant dépourvue de ladite couche transparente (24) et non électroconductrice ;
un élément d'antenne transparent (16) disposé dans ladite fente (34), dans lequel ledit élément d'antenne transparent (16) est électriquement déconnecté de ladite couche transparente (24) de telle sorte que ledit élément d'antenne transparent (16) fonctionne indépendamment de ladite couche transparente (24) ; et
un élément d'acheminement (36) couplé audit élément d'antenne transparent (16) pour exciter ledit élément d'antenne transparent (16) ;
**caractérisé en ce qu'**une ouverture (38) est définie dans ladite zone (26) et espacée de ladite fente (34), dans lequel ladite ouverture (38) est dépourvue de ladite couche transparente (24) et non électroconductrice, et dans lequel ladite ouverture (38) est distincte de ladite région extérieure (30), et dans lequel un élément d'antenne supplémentaire (44) qui est différent dudit élément d'antenne transparent (16) est disposé dans ladite ouverture (38) et dans lequel ledit élément d'antenne supplémentaire (44) est électriquement déconnecté de ladite couche transparente (24) de telle sorte que ledit élément d'antenne supplémentaire (44) fonctionne indépendamment de ladite couche transparente (24).

2. Ensemble fenêtre selon la revendication 1 dans lequel une partie (40) de ladite couche transparente (24) définissant un périmètre (42) de ladite ouverture (38) est couplée de manière capacitive audit élément d'antenne transparent (16) de telle sorte que ladite partie (40) est un élément parasite par rapport audit élément d'antenne transparent (16).

3. Ensemble fenêtre selon l'une quelconque des revendications précédentes dans lequel ladite ouverture (38) s'ouvre dans ladite région extérieure (30).

4. Ensemble fenêtre selon la revendication 3 dans lequel ladite ouverture (38) s'ouvre dans ladite région extérieure (30) à deux emplacements indépendants le long de ladite seconde limite périphérique (28) de ladite zone (26).

5. Ensemble fenêtre selon l'une quelconque des revendications 1 et 2 dans lequel ladite ouverture (38) est définie dans ladite zone (26) de ladite couche transparente (24) et entourée par celle-ci.

6. Ensemble fenêtre selon l'une quelconque des revendications précédentes dans lequel ledit élément d'antenne supplémentaire (44) est formé de fil métallique.

7. Ensemble fenêtre selon l'une quelconque des revendications précédentes dans lequel ledit élément d'antenne supplémentaire (44) est formé d'un revêtement transparent qui est électroconducteur.

8. Ensemble fenêtre selon l'une quelconque des revendications précédentes dans lequel ledit élément d'antenne transparent (16) et ledit élément d'antenne supplémentaire (44) mettent en oeuvre un système d'antenne à diversité.

9. Ensemble fenêtre selon l'une quelconque des revendications précédentes dans lequel ledit élément d'antenne transparent (16) est disposé de manière coplanaire par rapport audit élément d'antenne supplémentaire (44).

10. Ensemble fenêtre selon l'une quelconque des revendications précédentes dans lequel ledit élément d'antenne transparent (16) est disposé de manière non coplanaire par rapport audit élément d'antenne supplémentaire (44).

11. Ensemble fenêtre selon une quelconque des revendications précédentes dans lequel ledit élément d'antenne transparent (16) est partiellement disposé dans ladite région extérieure (30).

12. Ensemble fenêtre selon l'une quelconque des revendications précédentes dans lequel ledit élément d'acheminement (36) est électriquement déconnecté de ladite couche transparente (24) de telle sorte que ledit élément d'acheminement (36) excite ledit élément d'antenne transparent (16) indépendamment de ladite couche transparente (24).

13. Ensemble fenêtre selon l'une quelconque des revendications précédentes dans lequel ledit élément d'antenne transparent (16) est disposé de manière non coplanaire par rapport à ladite couche transparente (24).

14. Ensemble fenêtre selon l'une quelconque des revendications précédentes incluant une couche intermédiaire (32) disposée entre lesdites surfaces intérieures (18a, 20a) desdits substrats extérieur et intérieur (18, 20), dans lequel ledit élément d'antenne transparent (16) est disposé entre ladite couche intermédiaire (32) et ladite surface intérieure (18a, 20a) de l'un desdits substrats extérieur et intérieur (18, 20).
